(19) 
**Europäisches Patentamt**
**European Patent Office**
**Office européen des brevets**

(11) **EP 0 800 662 B1**

(12) **EUROPÄISCHE PATENTSCHRIFT**

(45) Veröffentlichungstag und Bekanntmachung des Hinweises auf die Patenterteilung:
**20.08.2008 Patentblatt 2008/34**

(21) Anmeldenummer: **96945697.9**

(22) Anmeldetag: **25.10.1996**

(51) Int Cl.:
***G02C 7/02*** *(2006.01)*

(86) Internationale Anmeldenummer:
**PCT/DE1996/002039**

(87) Internationale Veröffentlichungsnummer:
**WO 1997/015857 (01.05.1997 Gazette 1997/19)**

(54) **EINSTÄRKEN-BRILLENGLAS MIT ZWEI ASPHÄRISCHEN FLÄCHEN**

UNIFOCAL SPECTACLE LENS WITH TWO ASPHERICAL FACES

VERRE DE LUNETTES A UNIFOCALE AVEC DEUX FACES ASPHERIQUES

(84) Benannte Vertragsstaaten:
**AT CH DE ES FR GB IT LI NL SE**

(30) Priorität: **28.10.1995 DE 19540186**

(43) Veröffentlichungstag der Anmeldung:
**15.10.1997 Patentblatt 1997/42**

(73) Patentinhaber: **Rodenstock GmbH**
**80469 München (DE)**

(72) Erfinder:
• **GUILINO, Günter**
**D-81476 München (DE)**
• **PFEIFFER, Herbert**
**D-81247 München (DE)**
• **HAIMERL, Walter**
**D-80337 München (DE)**
• **ALTHEIMER, Helmut**
**D-87650 Baisweil (DE)**
• **ESSER, Gregor**
**D-85540 Haar (DE)**

(74) Vertreter: **Rocke, Carsten**
**Müller-Boré & Partner**
**Grafinger Strasse 2**
**81671 München (DE)**

(56) Entgegenhaltungen:
**EP-A- 0 379 976      EP-A- 0 560 999**
**WO-A-93/12452**

• **APPLIED OPTICS, Bd. 21, Nr. 6, 15.August 1982, NEW YORK US, Seiten 2982-2990, XP002030755 M. KATZ: "Aspherical surfaces used to minimize oblique astigmatic error, power error, and distortion of some high positive and negative power ophthalmic lenses"**

**Beschreibung**

**Technisches Gebiet**

Die Erfindung bezieht sich auf ein Einstärken-Brillenglas mit zwei asphärischen Flächen gemäß dem Oberbegriff des Patentanspruchs 1.

**Stand der Technik**

Ein derartiges Brillenglas ist durch das Beispiel 7 der EP 0 560 999 A1 bekannt. Das beschriebene Brillenglas weist eine rotationssymmetrische asphärische Fläche, also eine Fläche, die gleiche Hauptkrümmungsradien im Scheitel hat, sowie eine sogenannte atorische Fläche auf, also eine Fläche, die zusätzlich zur sogenannten sphärischen Wirkung auch eine astigmatische Wirkung hat. Die EP 0 560 999 A1 beschäftigt sich im wesentlichen damit, bei Brillengläsern mit astigmatischer Wirkung die Linsendicke bei gleichzeitiger Reduzierung der Bildfehler zu verringern.

Hierzu wird zwar in Verbindung mit Figur 5 dieser Druckschrift der Einfluß von Termen höherer Ordnung auf die Abhängigkeit des Krümmungsradius eines Meridians vom Abstand vom Scheitel diskutiert, dieser Figur ist jedoch zu entnehmen, daß gemäß der EP 0 560 999 A1 die Terme höherer Ordnung so gewählt werden, daß sie auf der tatsächlichen Brillenglasfläche keinen spürbaren Einfluß haben:

Selbst dann, wenn das Brillenglas in eine derzeit "unmoderne" tropfenförmige Fassung eingeschliffen wird, treten auf dem Brillenglas keine Abstände vom Scheitel auf, die 35 mm überschreiten. Figur 5 der EP 0 560 999 A1 ist jedoch zu entnehmen, daß sich gemäß dieser Druckschrift höhere Terme erst ab ca. 40 mm spürbar auswirken.

Erfindungsgemäß ist nun erkannt worden, daß aufgrund dieses in der EP 0 560 999 A1 vertretenen Konzepts keineswegs das maximale Potential an Dicken- und Bildfehlerverringerung ausgeschöpft wird.

Aus der EP 0 379 976 B1 ist ein asphärisches Brillenglas mit - ausschließlich - positiver Brechkraft bekannt, bei dem die vordere Fläche asphärisch und die augenseitige Fläche in herkömmlicher Weise sphärisch oder torisch ausgebildet ist. In dieser Druckschrift ist angegeben, daß es für die Verringerung der Mittendicke bei weiterhin guten optischen Abbildungseigenschaften von Vorteil sei, wenn die erste Ableitung der Krümmung nach dem Abstand vom Scheitel sich mit wachsendem Abstand vom Scheitel einmal verringert und sich dann vergrößert. Bei dieser Lehre wird jedoch übersehen, daß sowohl die optische Wirkung, d.h. die Brechkraft bzw. der Brechwert, als auch die Bildfehler und insbesondere der Astigmatismus und der Refraktionsfehler nicht durch eine Krümmung allein, sondern durch beide Hauptkrümmungen bestimmt wird.

Die Einhaltung der in der EP 0 379 976 B1 angegebenen Bedingung für den Verlauf der Krümmung eines Meridians ist damit für die Konstruktion einer dem Stand der Technik entsprechenden Fläche nicht hinreichend.

US 4 279 480 offenbart ein Brillenglas mit einer asphärischen Vorderfläche, wobei die Halbmeridiankurve durch die Formel $x=ay^2+by^3+cy^4+dy^5$, $a<0$, $b>0$ beschrieben wird.

**Darstellung der Erfindung**

Der Erfindung liegt die Aufgabe zugrunde ein Einstärken-Brillenglas mit zwei asphärischen Flächen, von denen wenigstens eine Fläche gleiche Hauptkrümmungsradien im Scheitel hat, anzugeben, bei dem die Verringerung der kritischen Dicke - d.h. der Mittendicke bei Gläsern mit positiver Wirkung und der Randdicke bei Gläsern mit negativer Wirkung - und die Reduzierung der Bildfehler nicht nur in einem ausgewogenen Verhältnis zueinander stehen, sondern auch die Reduzierung beider Größen möglichst groß ist.

Eine erfindungsgemäße Lösung dieser Aufgabe ist im Patentanspruch 1 angegeben. Weiterbildungen der Erfindung sind Gegenstand der Ansprüche 2 ff.

Erfindungsgemäß ist erkannt worden, daß man bei einem Einstärken-Brillenglas mit zwei asphärischen Flächen sowohl die kritische Dicke als auch die Bildfehler, d.h. insbesondere den Astigmatismus und den Refraktionsfehler stärker als aus dem Stand der Technik bekannt dadurch reduzieren kann, daß der mittlere Flächenbrechwert

$$B_f = (n-1)/2 * (1/R_1 + 1/R_2)$$

mit

$R_1$ :   Hauptkrümmungsradius 1 bzw. 2 in dem jeweiligen Punkt der Fläche

beider Flächen als Funktion des Abstandes h vom Scheitel für jeden Meridian, d.h. bei konstanten Azimutalwinkel Φ einen Extremwert und den Wert 0 hat. Dabei ist es bevorzugt, wenn sowohl ein Extremwert als auch der Wert 0 auf jeden Meridian auftritt.

Durch diese erfindungsgemäße Ausbildung kann erreicht werden, daß bei sehr kleiner kritischer Dicke der Astigmatismus ast und der Refraktionsfehler ref in einem zentralen Bereich, d.h. in einem Bereich mit einem Radius von ca. 20 mm um den Scheitel, sehr kleine Werte, d.h. Werte unter 0,1 dpt annehmen.

Selbst in dem sich an diesen Bereich anschließenden ringförmigen Bereich mit einem Radius von bis zu 30 mm erreichen die beiden Bildfehler nur Werte, die in diesem Bereich immer noch ein direktes Sehen ermöglichen würden. Sogar in dem äußeren Bereich, d.h. in dem Bereich, in dem der Radius größer als 30 mm ist, ist noch direktes Sehen möglich, indirektes Sehen jedoch praktisch ohne Einschränkung.

Bei Brillengläser mit negativer Brechkraft, bei der die Randdicke die kritische Dicke ist, kann diese um bis zu 30 % gegenüber herkömmlichen Brillengläsern mit nur einer asphärischen Fläche reduziert werden. Auch bei Gläsern mit positiver Brechkraft bei denen bereits durch die Verwendung einer asphärischen Fläche die Mittendicke sehr stark gegenüber herkömmlichen sphärischen Gläsern reduziert ist, läßt sich die Mittendicke noch um ca. 10 % verringern.

Das erfindungsgemäße Konzept eignet sich - wie sich überraschender Weise herausgestellt hat - sowohl für Brillengläser mit positiver als auch für Brillengläser mit negativer Wirkung. Die Vorteile der Erfindung kommen dabei insbesondere bei Brillengläsern zum Tragen, deren Gesamtwirkung zwischen -10 dpt und +8 dpt liegt.

In jedem Falle werden die erfindungsgemäß angegebenen Bedingungen für den mittleren Flächenbrechwert auf beiden asphärischen Flächen eingehalten. Dabei liegt sowohl ein Extremwert als auch eine Nullstelle des mittleren Flächenbrechwerts vor .

Das erfindungsgemäße Brillenglas kann bei rein sphärischer Verordnung zwei rotationssymmetrische Flächen aufweisen. Bei einer zusätzlichen zylindrischen Verordnung kann eine Fläche eine atorische Fläche sein, also eine Fläche, die in unterschiedlichen Hauptschnitten unterschiedliche Wirkungen hat. Die andere Fläche kann eine rotationssymmetrische Fläche oder eine Fläche sein, die zwar im Scheitel gleiche Hauptkrümmungsradien hat, deren Hauptkrümmungen aber im Randbereich unterschiedlich sind.

Bei dem erfindungsgemäßen Brillenglas ist die Differenz d zwischen maximaler und minimaler Dicke des Brillenglases eine Funktion f der sphärischen Wirkung sph, der astigmatischen Wirkung cyl, des Brechungsindex n und des Glasdurchmessers $\phi$, wobei für die Funktion f gilt,

$$d = f(sph, zyl, n, \phi) \leq a + b*(n-1.5) + c*(\phi - 66mm)$$

wobei bedeuten

$$a = f'(sph, zyl) = a1 + b1 * |sph + 0,5 * zyl|$$

$$b = f''(sph, zyl) = a2 + b2 * |sph + 0,5 * zyl|$$

$$c = f'''(sph, zyl) = b3 * |sph + 0,5 * zyl|$$

Die Koeffizienten sind je nach Verordnung unterschiedlich zu wählen:

Beispielsweise gilt für Verordnungen

$$sph + 0,5*zyl \leq -1,0 \ dpt,$$

und

$$a1 \leq -0,3 \ mm \quad und \quad b1 \leq 1,2 \ mm/dpt.$$

Dabei ist es besonders bevorzugt, wenn für die Koeffizienten gilt:

$$\text{sph} + 0,5*\text{zyl} \leq -1,0 \text{ dpt,}$$

und

$$a1 = -0,4 \text{ mm} \quad \text{und} \quad b1 = 1,1 \text{ mm/dpt.}$$

Für Verordnungen

$$\text{sph} + 0,5*\text{zyl} \geq 2 \text{ dpt}$$

gilt insbesondere

$$a1 \leq -0,05 \text{ mm} \quad \text{und} \quad b1 \leq 1,05 \text{ mm/dpt.}$$

Dabei ist es besonders bevorzugt, wenn gilt

$$a1 = -0,2 \text{ mm} \quad \text{und} \quad b1 = 1,05 \text{ mm/dpt.}$$

In jedem Falle gilt für die weiteren Koeffizienten a2, b2 und b3

$$a2 = -2 \text{ mm}$$

$$b2 = -0,2 \text{ mm/dpt}$$

$$b3 = 0,04 \text{ m.}$$

Bei einer weiteren erfindungsgemäßen Ausgestaltung hat der Astigmatismus ast und der Refraktionsfehler ref in einem zentralen Bereich um den Scheitel mit einem Radius von ca 20mm sehr kleine Werte, in einem sich daran anschließenden Bereich mit einem maximalen Radius von ca. 30 mm größere, aber immer noch für das direkte Sehen geeignete Werte, und im Bereich mit einem Radius von mehr als 30 mm Werte erreicht, daß in diesem Bereich noch indirektes Sehen möglich ist.

Dabei gilt insbesondere:

$$\text{ast} = \text{ast(s)} \leq a11 + b11 * s$$

$$\text{ref} = \text{ref(s)} \leq a21 + b22 * s$$

hierbei ist s die vom Betrag stärkere Hauptschnittswirkung der Verordnung.

**Patentansprüche**

1. Einstärken-Brillenglas mit zwei asphärischen Flächen, von denen wenigstens eine Fläche gleiche Hauptkrümmungsradien im Scheitel hat,
   **dadurch gekennzeichnet, daß** der Verlauf des mittleren Flächenbrechwerts

$$B_f = (n-1)/2 * (1/R_1 + 1/R_2)$$

mit

   $R_i$ : Hauptkrümmungsradius 1 bzw. 2 in dem jeweiligen Punkt der Fläche,

   beider Flächen als Funktion des Abstandes h bei konstantem Azimutalwinkel Φ vom Scheitel einen Extremwert und den Wert 0 hat, so daß der Astigmatismus ast und der Refraktionsfehler ref an allen Punkten eines zentralen Bereichs um den Scheitel mit einem Radius von ca. 20 mm Werte unter 0,1 dpt annehmen.

2. Brillenglas nach Anspruch 1,
   **dadurch gekennzeichnet, daß** beide Flächen rotationssymmetrische Flächen sind.

3. Brillenglas nach Anspruch 1,
   **dadurch gekennzeichnet, daß** eine Fläche in unterschiedlichen Hauptschnitten unterschiedliche Wirkungen hat, so daß das Brillenglas eine astigmatische Wirkung hat.

4. Brillenglas nach einem der Ansprüche 1 bis 3,
   **dadurch gekennzeichnet, daß** die Differenz d zwischen maximaler (dmax) und minimaler (dmin) Dicke des Brillenglases eine Funktion f der sphärische Wirkung sph, der astigmatischen Wirkung cyl, des Brechungsindex n und des Glasdurchmessers φ ist, wobei
   für die Funktion f gilt:

$$d = f(sph, cyl, n, \phi) \le a + b*(n-1.5) + c*(\phi - 66mm)$$

wobei bedeuten

$$a = f'(sph, cyl) = a1 + b1 * |sph + 0,5 * cyl|$$

$$b = f''(sph, cyl) = a2 + b2 * |sph + 0,5 * cyl|$$

$$c = f'''(sph, cyl) = b3 * |sph + 0,5 * cyl|$$

   a1 ≤ -0,3 mm und b1 ≤ 1,2 mm/dpt für sph + 0,5*cyl ≤ -1,0 dpt;
   a1 ≤ -0,05 mm und b1 ≤ 1,05 mm/dpt für sph + 0,5*cyl ≥ 2 dpt;
   a2 = -2 mm;
   b2 = -0,2 mm/dpt; und
   b3 = 0,04 m.

5. Brillenglas nach Anspruch 4,
   **dadurch gekennzeichnet, daß** für

$$\text{sph} + 0,5*\text{cyl} \leq -1,0 \text{ dpt}$$

gilt: a1 = -0,4 mm und b1 = 1,1 mm/dpt.

**6.** Brillenglas nach Anspruch 4,
**dadurch gekennzeichnet, daß** für

$$\text{sph} + 0,5*\text{cyl} \geq 2 \text{ dpt}$$

gilt: a1 = -0,2 mm und b1 = 1,05 mm/dpt.

**Claims**

**1.** Unifocal spectacle lens with two aspherical faces, of which at least one face has identical principal radii of curvature in the vertex,
**characterised in that** the course of the mean surface power

$$B_f = (n-1)/2 * (1/R_1 + 1/R_2)$$

where

$R_1$: principal radius of curvature 1 or 2 in the respective point of the face,

of both faces as a function of the distance h from the vertex with a constant azimuth angle $\Phi$ has an extreme value and the value 0, so that the astigmatism ast and the refractive error ref assume values of less than 0.1 dpt at all points of a central region around the vertex with a radius of approximately 20 mm.

**2.** Spectacle lens according to claim 1, **characterised in that** both faces are rotationally symmetric faces.

**3.** Spectacle lens according to claim 1, **characterised in that** a face has different effects in different principal sections, so that the spectacle lens has an astigmatic effect.

**4.** Spectacle lens according to one of claims 1 to 3, **characterised in that** the difference d between the maximum (dmax) and minimum (dmin) thickness of the spectacle lens is a function f of the spherical effect sph, the astigmatic effect cyl, the refractive index n and the lens diameter $\Phi$, wherein the following applies for the function f:

$$d = f(\text{sph, cyl, n, } \Phi) \leq a + b*(n - 1.5) + c*(\Phi - 66 \text{ mm})$$

wherein

$$a = f'(\text{sph, cyl}) = a1 + b1 * |\text{ sph} + 0.5 * \text{cyl }|$$

$$b = f''(\text{sph, cyl}) = a2 + b2 * |\text{ sph} + 0.5 * \text{cyl }|$$

$$c = f'' \ '(sph, cyl) = b3 * |\, sph + 0.5 * cyl\, |$$

a1 ≤ -0.3 mm and b1 ≤ 1.2 mm/dpt for sph + 0.5*cyl ≤ -1.0 dpt;
a1 ≤ -0,05 mm and b1 ≤ 1,05 mm/dpt for sph + 0,5*cyl ≥ 2 dpt;
a2 = -2 mm;
b2 = -0,2 mm/dpt;
and
b3 = 0,04 m.

**5.** Spectacle lens according to claim 4, **characterised in that** for

$$sph + 0.5*cyl \le -1.0 \ dpt$$

a1 = - 0.4 mm and b1 = 1.1 mm/dpt.

**6.** Spectacle lens according to claim 4, **characterised in that** for

$$sph + 0.5*cyl \ge 2 \ dpt$$

a1 = - 0.2 mm and b1 = 1.05 mm/dpt.


**Revendications**

**1.** Verre de lunette à puissance unique ayant deux surfaces asphériques, dont au moins une surface a des rayons de courbure identiques au sommet,
**caractérisé en ce que** le déroulement de la puissance de surface moyenne

$$B_f \ = \ (n-1)/2 \ * \ (1/R_1 \ + \ 1/R_2),$$

avec
$R_L$: rayon de courbure principal 1, respectivement 2 dans le point correspondant de la surface,
des deux surfaces a, en fonction de l'écart h pour un angle azimutal constant Φ à partir du sommet, une valeur extrême et la valeur 0, de telle sorte que l'astigmatisme ast et l'erreur de réfraction ref, sur tous les points d'un domaine central autour du sommet avec un rayon d'environ 20 mm, prennent des valeurs en dessous de 0,1 dpt.

**2.** Verre de lunettes selon la revendication 1,
**caractérisé en ce que** les deux surfaces sont des surfaces à symétrie de rotation.

**3.** Verre de lunettes selon la revendication 1,
**caractérisé en ce qu'**une surface dans des coupes principales différentes a des actions différentes, de telle sorte que le verre de lunettes a une action astigmatique.

**4.** Verre de lunettes selon l'une quelconque des revendications 1 à 3,
**caractérisé en ce que** la différence d entre l'épaisseur maximale (dmax) et l'épaisseur minimale (dmin) du verre de lunettes est une fonction f de l'action sphérique sph, de l'action astigmatique cyl, de l'indice de réfraction n et du diamètre du verre Φ, pour la fonction f étant valable la relation:

$$d = f(sph, cyl, n, \Phi) \leq a + b * (n-1,5) + c(\Phi - 66 \text{ mm})$$

a, b, c désignant chacun

$$a = f'(sph, cyl) = a1 + b1 * |sph + 0,5 * cyl|$$

$$b = f^*(sph, cyl) = a2 + b2 * |sph + 0,5 * cyl|$$

$$c = f^{**}(sph, cyl) = b3 * |sph + 0,5 * cyl|$$

a1 ≤ -0,3 mm et b1 ≤ 1,2 mm/dpt pour sph + 0,5*cyl ≤ - 1,0 dpt;
a1 ≤ -0,05 mm et b1 ≤ 1,05 mm/dpt pour sph + 0,5*cyl ≥ 2 dpt;
a2 = -2 mm;
b2 = -0,2 mm/dpt: et
b3 = 0,04 m.

5.  Verre de lunettes selon la revendication. 4,
    **caractérisé en ce que,** pour

$$sph + 0,5 * cyl \leq - 1,0 \text{ dpt,}$$

est valable: a1 = -0,4 mm et b1 = 1,1 mm/dpt.

6.  Verre de lunettes selon la revendication 4,
    **caractérisé en ce que,** pour

$$sph + 0,5 * cyl \geq 2 \text{ dpt,}$$

est valable: a1 = -0,2 mm et b1 = 1,05 mm/dpt.

**EP 0 800 662 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0560999 A1
- EP 0379976 B1
- US 4279480 A